# EUROPEAN PATENT APPLICATION

(11) **EP 1 312 917 A1**
(43) Date of publication of application: **21.05.2003**
(21) Application number: 01941134.7
(22) Date of filing: 20.06.2001
(51) Int. Cl.: G01N 30/88, G01N 30/26

(54) **METHOD FOR SEPARATING HYDROXIDE ION AND METHOD FOR ANALYZING HYDROXIDE ION AND ION CHROMATOGRAPH**

(30) Priority: 20.06.2000 JP 2000185292
(71) Applicant: JAPAN SCIENCE AND TECHNOLOGY CORPORATION, Kawaguchi-shi, Saitama 332-0012 (JP)
(72) Inventor: FUGETSU, Bunshi, Higashi-ku Sapporo-shi Hokkaido 065-0028 (JP)
(74) Representative: Calamita, Roberto
(86) International application number: JP0105277
(87) International publication number: WO01098772

(57) **Abstract**

A method for separating a hydroxide ion, characterized in that a hydroxide ion (OH⁻) in an aqueous solution is separated by a chromatograph. The method allows the separation and the measurement with high precision of a hydroxide ion which has not been achieved by a conventional pH titration method and pH meter method, and further allows the selective extraction and concentration thereof.

## Description

### Technical Field

The invention of this application relates to a method for separating a hydroxide ion (OH⁻), a method for analyzing a hydroxide ion (OH⁻), and an ion chromatograph therefor.

### Background Art

A hydroxide ion (OH⁻) is the most basic and important substance in various fields including life science. Without regard to the presence and the chemical behavior of this hydroxide ion, it is impossible to understand a chemical reaction, a chemical equilibrium and an electrochemical phenomenon in which components or a solution system in the process of life participates. Although the hydroxide ion is such a basically important substance, it has been to date deemed quite difficult or impossible to separate the hydroxide ion.

Accordingly, the invention of this application aims to provide, upon conquering the foregoing limits of the prior art, a new method that enables the selective separation of a hydroxide ion (OH⁻) and its analysis, and an ion chromatograph for this method.

### Disclosure of Invention

The invention of this application first provides a method for separating a hydroxide ion, characterized in that a hydroxide ion (OH⁻) in an aqueous solution is separated by a chromatograph, second provides the separating method, characterized in that a substance that recognizes a hydroxide ion (OH⁻) of a separation column is a substance having a carboxyl group (COO⁻), and third provides the separating method, characterized in that an aqueous solution containing at least one of a bicarbonate ion, a carbonate ion, a borate ion and a phosphate ion is used as an eluting solution.

Further, it provides fourth a method for analyzing a hydroxide ion, characterized in that a hydroxide ion (OH⁻) separated by the method of any of the first to third inventions is quantitatively analyzed.

And, the invention of this application fifth provides an ion chromatograph characterized by comprising a separation column of a hydroxide ion (OH⁻) in an aqueous solution and a feed unit of its eluting solution, sixth provides the ion chromatograph characterized in that a substance that recognizes the hydroxide ion (OH⁻) of the separation column is a substance having a carboxyl group (COO⁻), seventh provides the ion chromatograph characterized in that the eluting solution contains at least one of a bicarbonate ion, a carbonate ion, a borate ion and a phosphate ion, and eighth provides any of the above-mentioned ion chromatographs characterized in that it has a quantitative analysis unit.

The invention of this application as mentioned above is based on the novel knowledge obtained by the investigations of the inventors, namely the knowledge that a hydroxide ion (OH⁻) in an aqueous solution is bound to a water molecule to form a special complex such as OH⁻(H₂O)ₙ. The novel chromatograph system of this invention using such a property of the hydroxide ion (OH⁻) enables the hydroxide ion to be selectively separated and analyzed.

### Brief Description of Drawings

Fig. 1 is a view showing a complex of a hydroxide ion (OH⁻) and a water molecule.
Fig. 2 is a view showing a construction example of an ion chromatograph in this invention.
Fig. 3 is a graph showing an example (Example 1) of results on separation of a hydroxide ion in case of using an NaHCO₃ aqueous solution as an eluting solution.
Fig. 4 is a graph showing an example (Example 2) different from Fig. 3.
Fig. 5 is a graph showing a relation of an elution time of a hydroxide ion and a concentration of an electrolyte of an eluting solution (Example 3) in case of using an NaHCO₃ aqueous solution as an eluting solution.
Fig. 6 is a graph showing results of another example (Example 4) on separation of a hydroxide ion.
Fig. 7 is a graph showing a relation of an elution time of a hydroxide ion and a concentration of an electrolyte of an eluting solution (Example 5).
Fig. 8 is a graph showing results (Example 6) on separation of a hydroxide ion in case of using a conductivity meter as a detector.
Fig. 9 is a graph showing the same results as in Example 8 in case of using a UV detector.

### Best Mode for Carrying Out the Invention

The invention of this application has the foregoing characteristics. The embodiments thereof are described below.

To begin with, what is emphasized above all things is that the selective separation of the hydroxide ion (OH⁻) and its analysis method have been realized as column chromatography for the first time by the invention of this application. Column chromatography is simple and easy to operate. Accordingly, the method of this invention makes it possible to separate and analyze hydroxide ions (OH⁻) with high precision and to easily extract selectively hydroxide ions only from a substance containing large amounts of hydroxide ions and concentrate the same.

In the method for separating the hydroxide ion (OH⁻) in this invention as column chromatography, a substance (stationary phase) having a carboxyl group (COO⁻) as a functional group is preferably used.

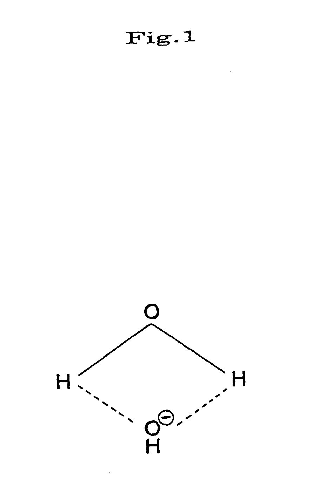

According to the knowledge acquired by the inventors of this invention, the hydroxide ion (OH⁻) is bound to a water molecule (H₂O) in an aqueous solution to form an "umbrella-type" complex as shown in Fig. 1. The effect of its negative charge is extremely low as compared with other anions. This complex is a special anion series which can penetrate and permeate a carboxy (COO⁻) membrane completely dissociated, namely a so-called minus "Donnan's membrane".

Accordingly, the hydroxide ion (OH⁻) is thereby selectively retained and separated.

Of course, the following fact has been already known. That is, a chemical behavior of a carboxyl group (COO⁻) as a functional group present in a stationary phase depends on pH of an eluting solution (mobile phase). When pH of an eluting solution mobile phase is lower than pKa (dissociation constant) of a functional group, a carboxyl group is partially protonated into a molecular state. A carboxyl group in a molecular state plays such a part as a "molecular channel" that allows passage of a special anion series (for example, HCO₃⁻, H₃PO₄⁻, NO₃⁻ and F⁻). Since these anions are partially protonated into a molecular state under a low pH condition, they can be passed through this channel. That is, a carboxy stationary phase put in such a state can retain and separate a weak acidic anion series. The separation method based on this principle is called ion exclusion chromatography, and apparatus associated therewith are commercially available.

However, a hydroxide ion (OH⁻) is not considered to be the foregoing special anion. Quite another knowledge has been deemed to be required for the hydroxide ion (OH⁻).

That the use of a carboxyl group (COO⁻) as a functional group is effective for separation of a hydroxide ion (OH⁻) has been found for the first time by using it not under an ordinary low pH condition but under a high pH condition. Under such a condition, anion that can be passed through a so-called minus "Donnan's membrane" is only the hydroxide ion/water molecule complex as stated above. This knowledge has enabled the selective retention and separation of the hydroxide ion only for the first time.

Specifically, in the separation method of this invention, with respect to a substance that recognizes a hydroxide ion (OH⁻), for example, a commercially available anion exclusion column with a carboxyl group (COO⁻) as a functional group can be used as such. Alternatively, the use of a substance in which a surface of a highly hydrophobic stationary phase is modified with a polymer such as a hydrophobic polymer having a carboxyl group (COO⁻) is taken as an example.

Of course, in the invention of this application, the functional group of the stationary phase is not limited to the carboxyl group (COO⁻). As noted earlier, any group will do so long as it can form a stationary phase having the same function as that of the carboxyl group (COO⁻).

And, in the, invention of this application, for the hydroxide ion (OH⁻) distributed in a stationary phase of a separation column to be eluted again in a mobile phase, it is necessary to use an aqueous solution containing a hydroxide ion as an eluting solution mobile phase. With respect to an eluting solution as a mobile phase, it is preferable to use an electrolytic aqueous solution having relatively high pH. Specifically, for example, an aqueous solution containing at least one of a bicarbonate ion, a carbonate ion, a borate ion and a phosphate ion, or other various solutions are listed. Among others, a NaHCO₃ aqueous solution containing a bicarbonate ion is shown as an appropriate example. The pH of these eluting solutions is not limited and as a standard, it is generally from 7.5 to 10.5, preferably from 8.1 to 9.2.

Further, the hydroxide ion (OH⁻) separated by the method of this application can be detected and quantitatively measured directly or indirectly using a conductivity method, a light absorbance method or the like. Since an intensity of a detection signal (for example, a conductivity or a light absorbance) is proportional to a concentration of a hydroxide ion, a calibration curve becomes linear (for example γ²> 0.9998). The detection covers a range of from an alkaline solution to a neutral solution and an acid solution.

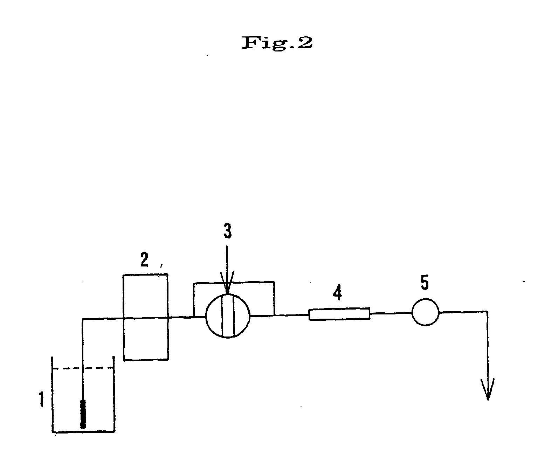

An ion chromatograph for the foregoing separation or analysis is also provided by this invention. Fig. 2 shows an example of its construction. For example, as shown in this Fig. 2, it can basically comprise (1) a tank of an electrolytic eluting solution having high pH, (2) a unit for introducing an eluting solution into a separation column, (3) a sample injection part, (4) a hydroxide ion separation part, and (5) a detector of a hydroxide ion.

The invention of this application is illustrated more specifically below by referring to Examples. Of course, this application is not limited by the following Examples.

### Examples

### <Example 1>

Separation of a hydroxide ion of an NaOH aqueous solution was conducted using a 100 mM sodium bicarbonate aqueous solution (pH 8.79) as an eluting solution.

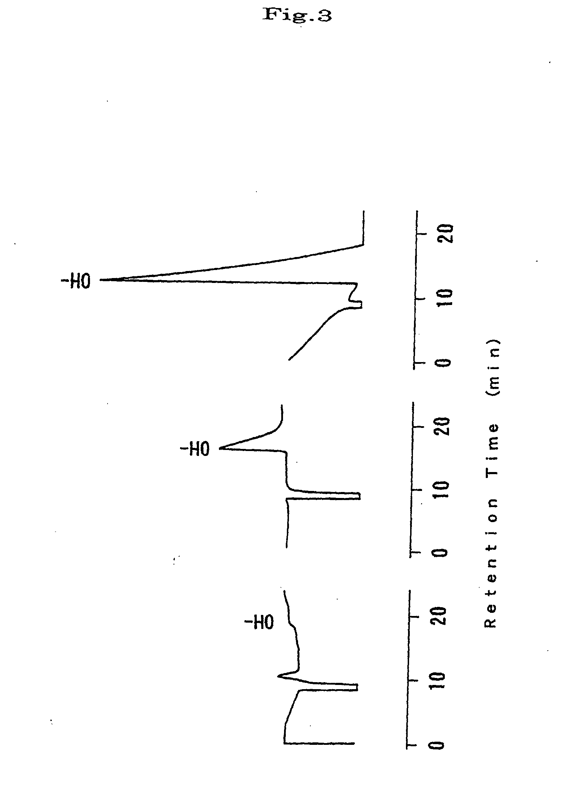

As a separation column, a commercially available column (length 300 mm, inner diameter 7.6 mm) for anion exclusion ion chromatography with a carboxyl group (COO⁻) as a functional group was used. The results were shown in Fig. 3. Sample concentrations correspond to 1.0 mM (left), 10.0 mM (middle) and 100 mM (right). Incidentally, a conductivity meter was used as a detector, and a flow rate of an eluting solution mobile phase was 1.0 mL/min.

The results shown in Fig. 3 reveal that a hydroxide ion (OH⁻) as an anion is selectively retained and separated.

### <Example 2>

Separation of a hydroxide ion was conducted using a 100 mM sodium bicarbonate aqueous solution as an eluting solution as in Example 1

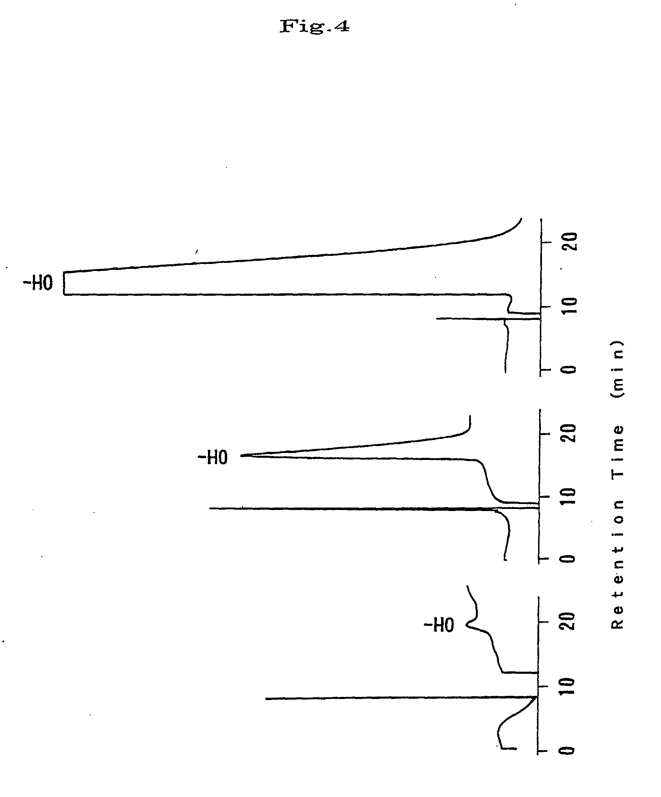

As a separation column, a commercially available column (length 300 mm, inner diameter 7.6 mm) for anion exclusion ion chromatography with a carboxyl group (COO⁻) as a functional group was used. The results were shown in Fig. 4. Sample concentrations correspond to 1.0 mM (left), 10.0 mM (middle) and 100 mM (right) in Fig. 4.

Incidentally, a UV detector (210 nm) was used as a detector, and a flow rate of an eluting solution mobile phase was 1.0 mL/min.

### <Example 3>

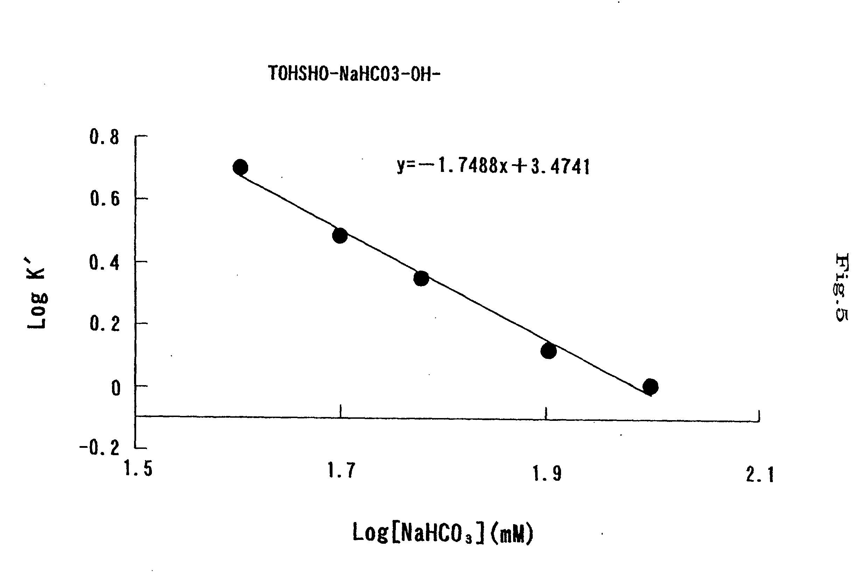

A relation of an elution time of a hydroxide ion and a concentration of an electrolyte of an eluting solution mobile phase in case of using a sodium bicarbonate aqueous solution as an eluting solution was examined. Fig. 5 shows the results thereof. In the drawing, k' is a retention constant of a hydroxide ion in a column. The other conditions were the same as in Example 1.

### <Example 4>

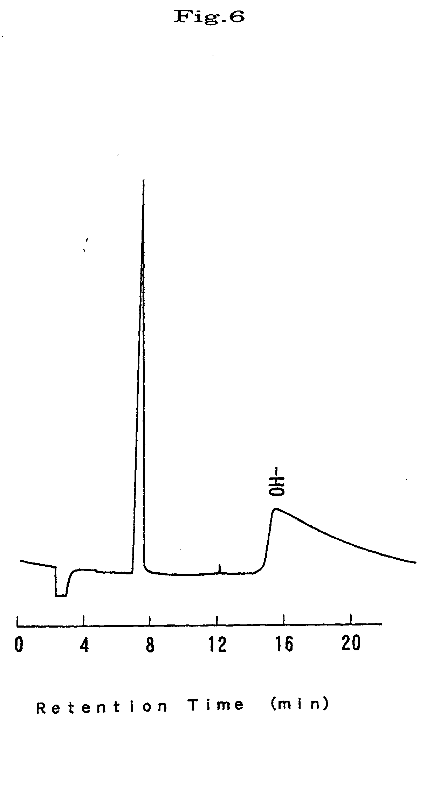

Separation of a hydroxide ion was conducted using a 40 mM sodium bicarbonate aqueous solution as an eluting solution mobile phase and a commercially available ODS column (length 250 mm, inner diameter 4.6 mm) for reversed phase HPLC modified with [-N⁺(R₃-CH₂-CH₂-COO⁻] as a separation column. Fig. 6 shows the results thereof. Incidentally, a flow rate of the eluting solution mobile phase was 1.0 mL/min, and 100.0 mM KOH was used as a sample. A conductivity meter was used as a detector.

The results in Fig. 6 reveal that a hydroxide ion (OH⁻) as an anion is selectively retained and separated.

### <Example 5>

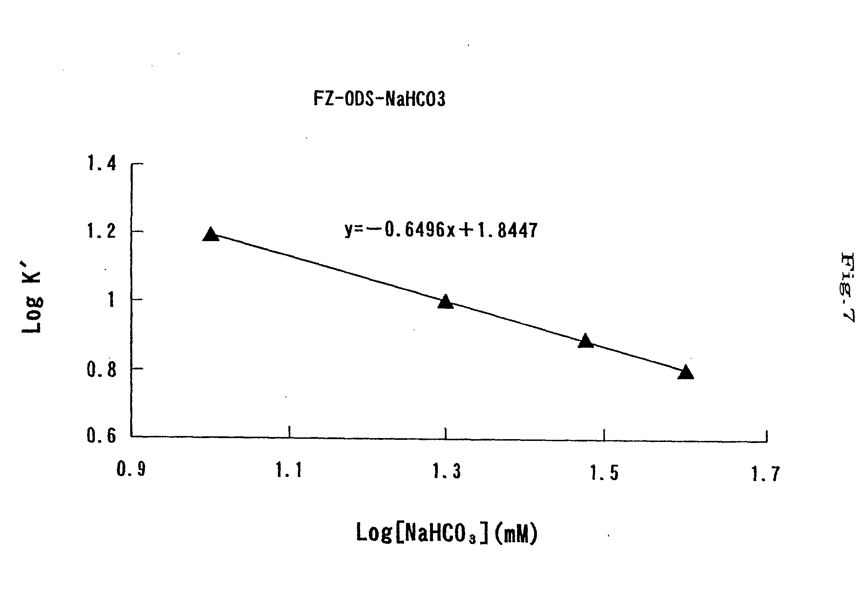

A relation of an elution time of a hydroxide ion and a concentration of an electrolyte of a mobile phase in case of using a sodium bicarbonate aqueous solution as an eluting solution was examined. The results were shown in Fig. 7. In the drawing, k' is a retention constant of a hydroxide ion in a column. The other conditions were the same as in Example 4.

### <Example 6>

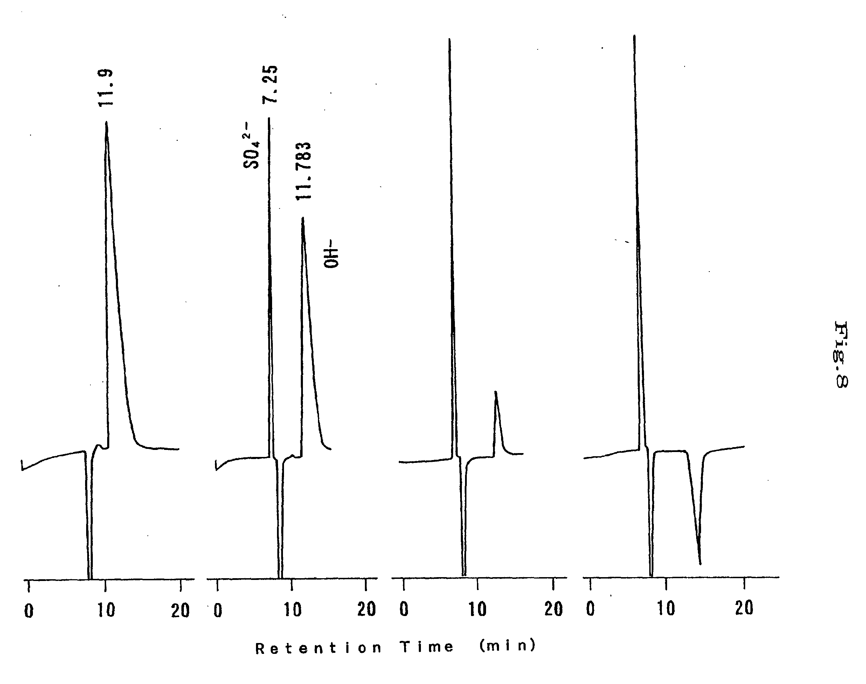

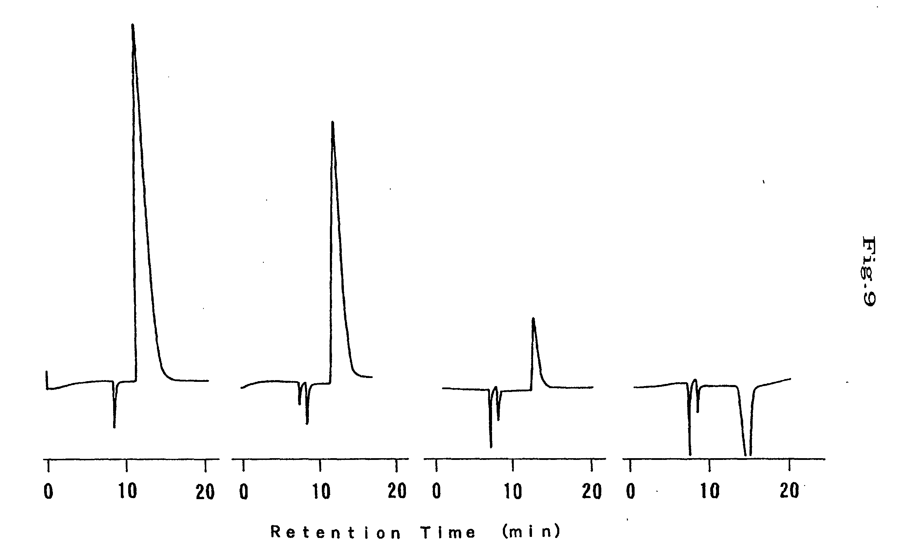

A small amount of H₂SO₄ was added to a standard sample aqueous solution of 100.0 mM NaOH, followed by separation and analysis. In 1^{st}_{trace}, the analysis was conducted by injecting a 100.0 mM NaOH aqueous solution as such. In 2^{nd}, 3^{rd}_{trace} and 4^{th}_{trace}, H₂SO₄ was added to this 100.0 mM NaOH aqueous solution, and the mixture was then injected into a column for analysis. The concentrations of the hydroxide ion are 57 mM (2^{nd}_{trace}) and 7.4 mM (3^{rd}_{trace}), and H₂SO₄ is in an excessive amount (excess H₂SO₄=2.2 mM) in 4^{th}_{trace}. An injection amount of the sample was 20 µL. With respect to an eluting solution as a mobile phase, a 100.0 mM NaHCO₃ aqueous solution was used, and its flow rate was 1.0 mL/min. As a separation column, an anion exclusion-type column (300 x 7.6, mm, i.d.,) was used. Fig. 8 shows the results in case of using a conductivity meter as a detector, and Fig. 9 shows the results in case of using a UV detector with UV=210 nm.

It is found that the hydroxide ion (OH⁻) as an anion is retained and separated more selectively than the sulfate ion.

### Industrial Applicability

As has been thus far described in detail, the invention of this application enables the precise measurement of the hydroxide ion or its separation which could not be realized by ordinary methods, namely a pH titration method and a pH meter method. It can greatly contribute towards various fields as well as investigations of chemical industries, environmental science and life science. Further, it can selectively concentrate and extract hydroxide ions only from a substance containing large amounts of hydroxide ions.

Moreover, it can extract a hydroxide ion (OH⁻) from a brine and immobilize CO₂ in a brine by a reaction of OH⁻ extracted and CO₂.

## Claims

1. A method for separating a hydroxide ion, **characterized in that** a hydroxide ion (OH⁻) in an aqueous solution is separated by a chromatograph.

2. The separating method of claim 1, **characterized in that** a substance that recognizes a hydroxide ion (OH⁻) of a separation column is a substance having a carboxyl group (COC⁻).

3. The separating method of claim 1 or 2, **characterized in that** an aqueous solution containing at least one of a bicarbonate ion, a carbonate ion, a borate ion and a phosphate ion is used as an eluting solution.

4. A method for analyzing a hydroxide ion, **characterized in that** a hydroxide ion (OH⁻) separated by the method of any of claims 1 to 3 is quantitatively analyzed.

5. An ion chromatograph **characterized by** comprising a separation column of a hydroxide ion (OH⁻) in an aqueous solution and a feed unit of its eluting solution.

6. The ion chromatograph of claim 5, **characterized in that** a substance that recognizes the hydroxide ion (OH⁻) of the separation column is a substance having a carboxyl group (COO⁻).

7. The ion chromatograph of claim 5 or 6, **characterized in that** the eluting solution contains at least one of a bicarbonate ion, a carbonate ion, a borate ion and a phosphate ion.

8. The ion chromatograph of any of claims 5 to 7, **characterized in that** it has a quantitative analysis unit.

## Amended claims

### Amended claims under Art. 19.1 PCT

**1.** A method for separating a hydroxide ion, **characterized in that** a hydroxideion (OH⁻) in an aqueous solution is separated by a chromatograph.

**2.** The separating method of claim 1, **characterized in that** a substance that recognizes a hydroxide ion (OH⁻) of a separation column is a substance having a carboxyl group (COO⁻).

**3.** The method as claimed in claim 2 wherein said separation column is an anion exclusion column.

**4.** The separating method of any of claims 1 to 3, **characterized in that** an aqueous solution containing at least one of a bicarbonate ion, a carbonate ion, a borate ion and a phosphate ion is used as an eluting solution.

**5.** A method for analyzing a hydroxide ion, **characterized in that** a hydroxide ion (OH⁻) separated by the method of any of claims 1 to 4 is quantitatively analyzed.

**6.** Amethod as claimed in claim 5 wherein said hydroxide ion is quantitatively analyzed by a conductivity method or a light absorbance method.

**7.** An ion chromatograph **characterized by** comprising a separation column of a hydroxide ion (OH⁻) in an aqueous solution and a feed unit of its eluting solution.

**8.** The ion chromatograph of claim 7, **characterized in that** a substance that recognizes the hydroxide ion (OH⁻) of the separation column is a substance having a carboxyl group (COO⁻) .

**9.** The ion chromatograph of claim 7 wherein said column is an anion exclusion column with a carboxyl functional group.

**10.** The ion chromatograph of any of claims 7 to 9, **characterized in that** the eluting solution contains at least one of a bicarbonate ion, a carbonate ion, a borate ion and a phosphate ion.

**11.** The ion chromatograph of any of claims 7 to 10, **characterized in that** it has a quantitative analysis unit.

**12.** The ion chromatograph of claim 11 wherein said analysis unit is a conductivity or light absorbance analysis unit.
